(19) Europäisches Patentamt

European Patent Office (11) Numéro de publication : **0 075 513**

Office européen des brevets **B1**

(12) **FASCICULE DE BREVET EUROPÉEN**

(45) Date de publication du fascicule du brevet : 19.12.84

(51) Int. Cl.³ : **F 16 F 9/34**

(21) Numéro de dépôt : **82401673.7**

(22) Date de dépôt : **14.09.82**

(54) **Piston à clapets pour amortisseur.**

(30) Priorité : **23.09.81 FR 8117908**

(43) Date de publication de la demande : **30.03.83 Bulletin 83/13**

(45) Mention de la délivrance du brevet : **19.12.84 Bulletin 84/51**

(84) Etats contractants désignés : **DE GB IT**

(56) Documents cités : **FR-A- 2 360 800**

(73) Titulaire : **AUTOMOBILES PEUGEOT 75, avenue de la Grande Armée F-75116 Paris (FR)**

**AUTOMOBILES CITROEN 117-167 Quai André Citroen F-75747 Paris Cedex 15 (FR)**

(72) Inventeur : **Ferrand, Michel 23 Rue des Sources F-25200 Montbellard (FR)** Inventeur : **Durupt, Maurice 7 Rue des Coquelicots F-25550 Bavans (FR)**

(74) Mandataire : **Moncheny, Michel et al c/o Cabinet Lavoix 2 Place d'Estienne d'Orves F-75441 Paris Cedex 09 (FR)**

Jouve, 18, rue St-Denis, 75001 Paris, France

## Description

L'invention est relative aux amortisseurs hydrauliques comprenant un piston qui coulisse dans un cylindre qu'il sépare en deux chambres contenant du liquide et qui est muni de plusieurs passages susceptibles de relier les deux chambres, chaque passage étant obturé par un clapet s'ouvrant lors du coulissement du piston dans l'un des deux sens, permettant un écoulement freiné du liquide d'une chambre vers l'autre.

Dans le document FR-A-2 360 800, un amortisseur est décrit dont le piston comporte généralement, fixés sur une tige de piston coaxiale au cylindre, un corps central et deux pièces latérales appelées limiteurs, portant les clapets et disposées axialement de part et d'autre du corps. Celui-ci comporte une périphérie cylindrique assurant le guidage dans l'alésage du cylindre et deux faces perpendiculaires à l'axe du cylindre ; il est traversé par des passages débouchant chacun sur les deux faces par des orifices circulaires. Chaque pièce latérale a une périphérie espacée de l'alésage du cylindre et est traversée par des trous alignés avec ceux du corps et contenant chacun un ressort hélicoïdal qui pousse un clapet circulaire contre la paroi formant siège de l'un des orifices du corps. L'écartement entre chaque clapet et son siège est limité par butée du clapet contre une face d'appui du limiteur.

De tels pistons ont l'avantage de permettre un dosage précis de la limitation ou du freinage de l'écoulement — donc de la caractéristique d'amortissement — dans chaque sens de déplacement du piston, en dimensionnant de manière appropriée chaque ressort de clapet et chaque espacement entre les faces d'appui des pièces latérales et la face en regard du corps. Ils présentent par contre l'inconvénient d'être relativement encombrants en direction axiale, du fait de la superposition du corps et des deux pièces latérales ; il en résulte, pour un cylindre donné, une course réduite du piston et de sa tige, course qui risque d'être insuffisante en particulier s'il s'agit d'un amortisseur pour suspension de véhicule automobile dont les débattements maximaux doivent être assez importants pour satisfaire au confort et aux grandes variations de charge.

L'invention a pour but de remédier à cet inconvénient et de proposer un piston d'amortisseur qui soit moins encombrant en direction axiale.

Elle concerne un piston comprenant, fixées sur une tige, une pièce centrale et deux pièces latérales disposées axialement de part et d'autre de cette pièce centrale, la pièce centrale et les pièces latérales comportant des passages axiaux alignés obturés par des clapets reçus dans les pièces latérales et coopérant avec des sièges délimités par la pièce centrale, caractérisé en ce que la pièce centrale est un disque mince dont le diamètre est inférieur au diamètre maximal du piston et en ce qu'au moins l'une des deux pièces latérales porte à sa périphérie une bague de guidage.

Suivant d'autres caractéristiques :

— la bague est fendue et réalisée en matériau plastique à faible coefficient de frottement ;

— les deux pièces latérales comportent à leur périphérie une surface cylindrique s'étendant entre une face d'extrémité adjacente à la pièce centrale et un épaulement radial, la bague de guidage étant reçue dans le logement délimité par lesdites surfaces cylindriques et lesdits épaulements ;

— une des pièces latérales est munie d'une saillie axiale coopérant avec une ouverture du disque et avec un embrèvement de l'autre pièce latérale, de manière à réaliser un positionnement angulaire relatif du disque et des deux pièces latérales ;

— le disque est en tôle, et les passages obturés qu'il comporte sont des perforations effectuées par découpage ;

— au droit du contour de ces perforations, le disque est déformé ou encoché de manière à assurer un trajet de fuite pour le liquide entre siège et clapet quand ils sont en contact ;

— le disque comporte au moins une perforation supplémentaire assurant un trajet de fuite permanent.

Il est donné ci-après description d'un mode particulier de réalisation d'un piston d'amortisseur selon l'invention, avec référence aux dessins annexés sur lesquels :

la Figure 1 est une vue en coupe axiale du piston monté dans l'alésage d'un cylindre, suivant ligne 1-1 de la Fig. 2 ;

la Figure 2 est une vue partielle de gauche de la Fig. 1, avec arrachement et coupe partielle ;

la Figure 3 est une vue partielle en coupe suivant la ligne 3-3 de la Fig. 2.

Dans l'alésage 1 du cylindre 2 d'un amortisseur, est monté coulissant un piston 3 séparant ce cylindre en deux chambres 4, 5 emplies de liquide. Le piston comprend deux pièces latérales 6, 7 appelées limiteurs, qui enserrent une pièce centrale constituée par un disque perforé 8 et qui sont fixées par exemple par sertissage sur l'extrémité 9a d'une tige 9 coaxiale à l'axe du cylindre. Chaque pièce 6, 7 comporte à sa périphérie une surface cylindrique 10, 11 s'étendant entre une face d'extrémité 12, 13 adjacente au disque 8 et un épaulement radial 14, 15. Entre les deux épaulements 14, 15 est maintenue axialement une bague fendue 16 en matériau plastique à faible coefficient de frottement dont la surface extérieure assure le guidage du piston dans l'alésage 1. La fente de la bague permet le montage aisé de celle-ci et est épaulée, de manière connue, pour éviter que du liquide s'y écoule d'une des chambres 4, 5 vers l'autre. Chaque pièce 6, 7 est traversée parallèlement à l'axe, par deux séries de trous : les uns 17, 18 contiennent chacun un ressort hélicoïdal 19, 20 qui pousse un clapet circulaire 21, 22 contre son siège constitué par le contour d'une des perforations du disque 8 ; les autres 23, 24 font face aux trous de la première série de l'autre pièce latérale. Chaque trou 17, 18 comporte un fond ouvert 17a, 18a, servant d'appui au ressort, et débouche, du côté du disque, dans une large gorge annulaire 25, 26 ménagée dans la face 12, 13 du militeur : autour de chaque trou, le fond 27 de cette gorge comporte un bossage 28 ou une feuillure 29 constituant une face d'appui parallèle au disque et servant de butée pour une collerette 30 du clapet quand celui-ci s'écarte de son siège.

Le disque 8 est en tôle mince découpée et comporte des perforations circulaires 31 au droit des trous 17, 18 des pièces 6, 7. Ces perforations sont réalisées directement par découpage fin. Pour assurer le bon alignement des perforations et des trous, une saillie axiale 32 de la pièce 6 est engagée avec un jeu angulaire J faible ou nul dans une ouverture 33 du disque et dans un embrèvement 34 de la pièce 7. Autour de cet embrèvement, une proéminence 35 dans la gorge 26 fait face à une proéminence équivalente 36 dans la gorge 25 de la pièce 6 de manière que le contour extérieur, comme le contour inférieur, des faces 12 et 13 des pièces 6, 7 assure un contact continu étanche contre le disque, empêchant notamment toute fuite de liquide des trous 23, 24 vers les périphéries 10, 11, fuite qui perturberait la loi de freinage d'écoulement de l'amortisseur. En revanche, des passages de fuite permanente peuvent être aménagés, de manière non représentée, soit par au moins un conduit calibré traversant un clapet ou le disque 8 et éventuellement les pièces 6, 7, conduit notamment formé par une saignée axiale dans l'alésage recevant la tige 9 ou par une perforation supplémentaire du disque 8, soit par légère déformation de la tôle sur le contour d'au moins une perforation 31, formant un creux dans le siège de clapet correspondant, soit encore par découpage d'une encoche dans ce contour.

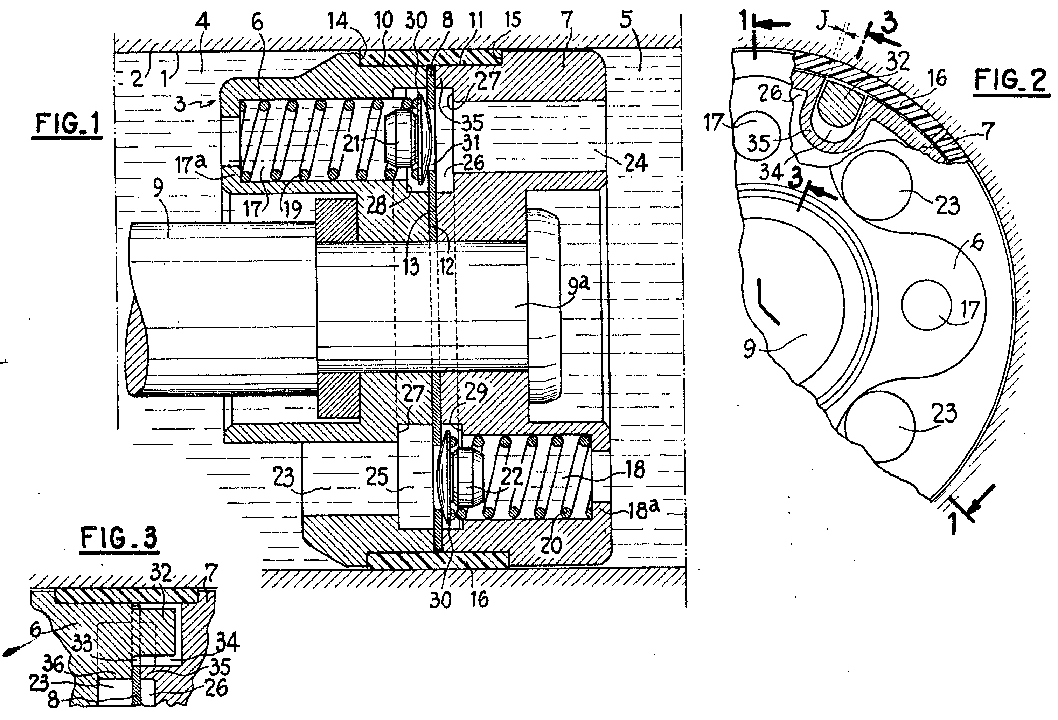

Lorsque le piston se déplace dans un sens, par exemple, vers la droite sur la Fig. 1, la pression du liquide de la chambre 5 s'élève, maintient fermés les clapets 22 situés à droite du disque 8 et pousse les clapets 21 situés à gauche. Chaque clapet 21 s'écarte de son siège en comprimant le ressort, laissant s'écouler du liquide de la chambre 5 vers la chambre 4, quand la vitesse de coulissement du piston atteint une valeur déterminée ; la levée du clapet, c'est-à-dire son écartement par rapport à son siège, devient maximale quand sa collerette 30 bute contre la face d'appui 28, et procure un freinage déterminé de l'écoulement. Pour que ce freinage varie avec la vitesse de coulissement du piston selon une loi désirée pour l'amortisseur, les divers clapets sont associés à des ressorts tarés différemment et les espacements entre les collerettes 30 des divers clapets et les faces d'appui correspondantes 28, 29 peuvent différer, ainsi que, par suite, les levées maximales des clapets, déterminant divers freinages d'écoulement.

En variante, la bague 16 est portée par la périphérie d'une seule pièce latérale, le maintien axial de la bague étant alors réalisé du côté opposé à l'épaulement tel que 14, soit par le contour de l'autre limiteur, soit par celui du disque, alors prévu légèrement plus grand que dans le cas précédent.

Le piston proposé est non seulement de faible longueur axiale par rapport à ceux existants du même type, et plus léger, ce qui est particulièrement avantageux dans le cas des amortisseurs utilisés sur véhicules automobiles, mais encore moins coûteux, notamment grâce à la simplicité de fabrication des sièges de clapets, sans usinage.

## Revendications

1. Piston, notamment pour amortisseur, comprenant fixées sur une tige (9), une pièce centrale (8) et deux pièces latérales (6, 7) disposées axialement de part et d'autre de cette pièce centrale, la pièce centrale et les pièces latérales comportant des passages axiaux alignés (17, 24, 31 ; 18, 23, 31) obturés par des clapets (21, 22) reçus dans les pièces latérales et coopérant avec des sièges délimités par la pièce centrale, caractérisé en ce que la pièce centrale est un disque mince (8) dont le diamètre est inférieur au diamètre maximal du piston et en ce qu'au moins l'une des deux pièces latérales porte à sa périphérie une bague de guidage (16).

2. Piston suivant la revendication 1, caractérisé en ce que la bague de guidage (16) est fendue et réalisée en matière à faible coefficient de frottement.

3. Piston suivant la revendication 1, caractérisé en ce que chaque pièce latérale comporte à sa périphérie une surface cylindrique (10, 11) s'étendant entre un épaulement radial (14, 15), et une face d'extrémité (12, 13) adjacente, au disque (8) celui-ci ayant un diamètre inférieur à celui desdites surfaces cylindriques (10, 11) et la bague de guidage (16) étant reçue dans le logement délimité par lesdites surfaces cylindriques et lesdits épaulements.

4. Piston suivant la revendication 1, caractérisé en ce que l'une des pièces latérales comporte à sa périphérie une surface cylindrique (10) s'étendant entre un épaulement radial (14) et une face d'extrémité (12) adjacente au disque (8), celui-ci ayant un diamètre supérieur à celui de la surface cylindrique (10) et la bague de guidage (16) étant reçue dans le logement délimité par cette surface cylindrique (10), cet épaulement (14) et le disque (8).

5. Piston suivant l'une quelconque des revendications 1 à 4, caractérisé en ce que le disque (8) et les pièces latérales (6, 7) comportent des moyens complémentaires (32, 33, 34) de positionnement angulaire.

6. Piston suivant la revendication 1, caractérisé en ce que le disque (8) est en tôle et les passages obturés qu'il comporte sont des perforations effectuées par découpage.

7. Piston suivant l'une quelconque des revendications 1 à 6, caractérisé en ce que le disque (8) est en contact étanche continu avec les pièces latérales (6, 7) dans une zone située radialement entre les passages (31) et sa périphérie.

## Claims

1. A piston, in particular for a damper, comprising, fixed on a rod (9), a central element (8) and two lateral elements (6, 7) disposed axially on each side of the central element, the central element and the lateral elements comprising aligned axial passages (17, 24, 31 ; 18, 23, 31) which are closed by valve members (21, 22) received in the lateral elements and cooperating with seats defined by the central element, characterised in that the central element is a thin disc (8) whose diameter is less than the maximum diameter of the piston and at least one of the two lateral elements carries a guide ring (16) on its periphery.

2. A piston according to claim 1, characterised in that the guide ring (16) is split and made from a material having a low coefficient of friction.

3. A piston according to claim 1, characterised in the each lateral element has on its periphery a cylindriqcal surface (10, 11) which extends between a radial shoulder (14, 15) and an end surface (12, 13) adjacent the disc (8), the latter having a diameter less than that of said cylindrical surfaces (10, 11) and the guide ring (16) being received in the recess defined by said cylindrical surfaces and said shoulders.

4. A piston according to claim 1, characterised in that one of the lateral elements has on its periphery a cylindrical surface (10) which extends between a radial shoulder (14) and an end surface (12) adjacent to the disc (8), the latter having a diameter larger than that of the cylindrical surface (10) and the guide ring (16) being received in the recess defined by this cylindrical surface (10), this shoulder (14) and the disc (8).

5. A piston according to any one of the claims 1 to 4, characterised in that the disc (8) and the lateral element (6, 7) include complementary angular positioning means (32, 33, 34).

6. A piston according to claim 1, characterised in that the disc (8) is of sheet metal and the closed passages it includes are perforations produced by a punching operation.

7. A piston according to any one of the claims 1 to 6, characterised in that the disc (8) is in continuous sealed contact with the lateral element (6, 7) in a region located radially between the passages (31) and its periphery.

## Ansprüche

1. Kolben, insbesondere für Stoßdämpfer, bei dem an einer Stange (9) ein zentrales Teil und zwei seitliche Teile (6, 7) befestigt sind, die axial beiderseits des zentralen Teils angeordnet sind, wobei das zentrale Teil und die seitlichen Teile axial ausgefluchtete Kanäle (17, 24, 31 ; 18, 23, 31) aufweisen, die von Verschlußgliedern (21, 22) verschlossen sind, die in den seitlichen Teilen aufgenommen sind und mit vom zentralen Teil gebildeten Sitzen zusammenarbeiten, dadurch gekennzeichnet, daß das zentrale Teil eine dicke Scheibe (8) ist, deren Durchmesser kleiner als der größte Durchmesser des Kolbens ist, und daß wenigstens eines der beiden Seitenteile an seinem Umfang einen Führungsring (16) trägt.

2. Kolben nach Anspruch 1, dadurch gekennzeichnet, daß der Führungsring (16) geschlitzt und aus einem Material mit kleinem Reibungskoeffizient hergestellt ist.

3. Kolben nach Anspruch 1, dadurch gekennzeichnet, daß jedes Seitenteil an seinem Umfang eine zylindrische Fläche (10, 11) aufweist, die sich zwischen einer radialen Schulter (14, 15) und einer an die Scheibe (8) angrenzenden Endfläche (12, 13) erstreckt, wobei der Durchmesser der Scheibe kleiner als derjenige der zylindrischen Flächen (10, 11) und der Führungsring in dem Sitz aufgenommen ist, der durch die zylindrischen Flächen und die Schultern gebildet ist.

4. Kolben nach Anspruch 1, dadurch gekennzeichnet, daß eines der Seitenteile an seinem Umfang eine zylindrische Fläche (10) aufweist, die sich zwischen einer radialen Schulter (14) und einer an die Scheibe (8) angrenzenden Endfläche (12) erstreckt, wobei der Durchmesser der Scheibe größer als derjenige der zylindrischen Fläche (10) und der Führungsring (16) in dem Sitz aufgenommen ist, der durch die zylindrische Fläche (10), die Schulter (14) und die Scheibe (8) gebildet ist.

5. Kolben nach einem der Ansprüche 1 bis 4, dadurch gekennzeichnet, daß die Scheibe (8) und die Seitenteile (6, 7) zur Winkelpositionierung komplementäre Einrichtungen (32, 33, 34) aufweist.

6. Kolben nach Anspruch 1, dadurch gekennzeichnet, daß die Scheibe (8) aus Blech besteht und die vier verschlossenen Kanäle durch Stanzen hergestellte Perforationen sind.

7. Kolben nach einem der Ansprüche 1 bis 6, dadurch gekennzeichnet, daß die Scheibe (8) in ständiger dichter Berührung mit den Seitenteilen (6, 7) in einer Zone steht, die sich radial zwischen den Kanälen (31) und ihrem Umfang erstreckt.

FIG.1

FIG.2

FIG.3